# EUROPEAN PATENT APPLICATION

(11) **EP 4 822 327 A1**
(43) Date of publication of application: **14.10.2026**
(21) Application number: 26165462.8
(22) Date of filing: 17.03.2026
(51) Int. Cl.: G01M 15/10, B60W 40/09, B60W 40/10, B60W 40/105, B60W 40/107, G01M 15/04, G01M 15/05, G01M 17/007, G07C 5/08, G08G 1/01

(54) **DATA ACQUISITION DEVICE AND DATA ACQUISITION METHOD**

(30) Priority: 24.03.2025 JP 2025048381
(71) Applicant: Toyota Jidosha Kabushiki Kaisha, Toyota-shi, Aichi-ken 471-8571 (JP)
(72) Inventor: HYODOH, Junji, Toyota-shi 471-8571 (JP)
(74) Representative: D Young & Co LLP

(57) **Abstract**

A data acquisition device and a data acquisition method are provided. Each time a traveling speed is acquired during a vehicle performance test, processing circuitry (51) identifies which of multiple divided speed regions (LVR, MVR, HVR) a subject traveling speed belongs to (S31). The subject traveling speed is one of the acquired traveling speeds. It is determined whether a reference value (Van-1) is less than or equal to a provisional criterion value (RVL1 to RVL4) (S41). One of the provisional criterion values (RVL3 and RVL4) that are greater than or equal to a criterion value (RVL) is selected as a selection criterion value (RVL3) (S52). It is determined that a manner in which the vehicle performance test is conducted satisfies a performance condition when, in all the speed regions (LVR, MVR, HVR), a calculated value (OR) related to the selection criterion value is greater than or equal to a threshold (S53: YES) (S56). (Fig. 7)

## Description

### CROSS-REFERENCE TO RELATED APPLICATIONS

This application is based upon and claims the benefit of priority from Japanese Patent Application No. 2025-048381, filed on March 24, 2025, the entire contents of which are incorporated herein by reference.

### BACKGROUND

### 1. Field

The present disclosure relates to a data acquisition device and a data acquisition method.

### 2. Description of Related Art

In real driving emissions (RDE) testing and the like, vehicle performance tests are conducted on public roads or similar roadways. Components in exhaust gas emitted during the vehicle performance test are analyzed. The vehicle performance test is required to be conducted so as to satisfy predetermined performance conditions.

A vehicle performance test apparatus disclosed in JP2019-203888A shows a driver, during a vehicle performance test, a driving operation style that satisfies performance conditions.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a data acquisition device mounted on a vehicle includes processing circuitry and a storage device. The processing circuitry is configured to acquire a traveling speed of the vehicle multiple times. The processing circuitry is configured to perform, each time the traveling speed is acquired during a vehicle performance test of the vehicle: identifying which of multiple divided speed regions a subject traveling speed, which is one of the acquired traveling speeds, belongs to; updating, as an average vehicle speed in the identified speed region, a sum of a quotient obtained by dividing the subject traveling speed by a number of acquisitions of the multiple traveling speeds in the identified speed region and a quotient obtained by dividing an accumulated value of the multiple traveling speeds excluding the subject traveling speed in the identified speed region by the number of acquisitions; calculating a reference value that is a product of the subject traveling speed and an acceleration of the vehicle; determining whether the reference value is less than or equal to a provisional criterion value, the provisional criterion value being a value output in the identified speed region by a function that outputs a criterion value when the average vehicle speed is input into the function, and the provisional criterion value being one of provisional criterion values corresponding to the multiple speed regions; and updating, as a calculated value, a ratio of a number of the reference values that are less than or equal to the provisional criterion value to a number of the reference values that belong to the identified speed region and are stored in the storage device for each of the provisional criterion values. The processing circuitry is configured to perform, by checking information stored in the storage device after the vehicle performance test is ended: calculating the criterion values in the respective speed regions; selecting, as a selection criterion value, one of the provisional criterion values that are greater than or equal to the criterion values; determining that the manner in which the vehicle performance test is conducted satisfies a performance condition when, in all the speed regions, the calculated value related to the selection criterion value is greater than or equal to a threshold; and determining that the manner in which the vehicle performance test is conducted does not satisfy the performance condition when, in at least any one of the speed regions, the calculated value related to the selection criterion value is less than the threshold.

In another general aspect, a data acquisition device mounted on a vehicle includes processing circuitry and a storage device. The processing circuitry is configured to acquire a traveling speed of the vehicle multiple times. The processing circuitry is configured to perform, each time the traveling speed is acquired during a vehicle performance test of the vehicle: identifying which of multiple divided speed regions a subject traveling speed, which is one of the acquired traveling speeds, belongs to; updating, as an average vehicle speed in the identified speed region, a sum of a quotient obtained by dividing the subject traveling speed by a number of acquisitions of the multiple traveling speeds in the identified speed region and a quotient obtained by dividing an accumulated value of the multiple traveling speeds excluding the subject traveling speed in the identified speed region by the number of acquisitions; calculating a reference value that is a product of the subject traveling speed and an acceleration of the vehicle; determining whether the reference value is less than or equal to a provisional criterion value, the provisional criterion value being a value output in the identified speed region by a function that outputs a criterion value when the average vehicle speed is input into the function, and the provisional criterion value being one of provisional criterion values corresponding to the multiple speed regions; and updating, as calculated values, a number of the reference values belonging to the identified speed region stored in the storage device for each of the provisional criterion values and a number of the reference values that are less than or equal to the provisional criterion value. The processing circuitry is configured to perform, by checking information stored in the storage device after the vehicle performance test is ended: calculating the criterion value in each of the speed regions; selecting, as a selection criterion value, one of the provisional criterion values that are greater than or equal to the criterion values; calculating, for each of the speed regions, a ratio of a number of the reference values less than or equal to the selection criterion value to a number of the reference values belonging to the speed region; determining that the manner in which the vehicle performance test is conducted satisfies the performance condition when the at-or-below maximum criterion value ratios in all the speed regions are greater than or equal to a threshold; and determining that the manner in which the vehicle performance test is conducted does not satisfy the performance condition when the ratio in at least one of the speed regions is less than the threshold.

The above-described data acquisition device can determine whether the manner in which the vehicle performance test is conducted satisfies the specified performance condition without requiring a relatively large storage capacity.

Whether data acquired through the vehicle performance test is data suitable for analysis performed through the vehicle performance test satisfying performance conditions is determined based on a calculated value indicating successive manner of running during the vehicle performance test. As the calculated value, a value calculated based on a Vapos value may be used. The Vapos value is a product of a vehicle traveling speed and an acceleration during the vehicle performance test.

For example, multiple traveling speeds acquired during the vehicle performance test are continuously stored until the vehicle performance test is ended. After the vehicle performance test is ended, acceleration is calculated based on the history data of the traveling speeds. In this manner, all the Vapos values during the vehicle performance test can be calculated. However, when the Vapos values are calculated in this manner to acquire the calculated value, a relatively large storage capacity is required to store the data acquired throughout the vehicle performance test.

It is desirable to determine whether the manner in which the vehicle performance test is conducted satisfies a specified performance condition without requiring a relatively large storage capacity. The above-described configuration resolves this issue.

Other features and aspects will be apparent from the following detailed description, the drawings, and the claims.

### BRIEF DESCRIPTION OF THE DRAWINGS

Fig. 1 is a schematic diagram showing a configuration of a vehicle equipped with a data acquisition device according to a first embodiment.
Fig. 2 is a flowchart showing a series of processes executed by a data acquisition device of a comparative example.
Fig. 3 is a table showing combinations of time points at which traveling speeds are acquired by the data acquisition device of the comparative example, traveling speeds of a vehicle, accelerations of the vehicle, and Vapos values.
Fig. 4 is a scatter diagram showing the relationship between the traveling speeds acquired by the data acquisition device of the comparative example through a vehicle performance test and Vapos values calculated based on traveling speeds.
Fig. 5 is a flowchart showing a series of processes executed by the data acquisition device of Fig. 1 when calculating a Vapos value.
Fig. 6 is a diagram showing a manner in which the data acquisition device of Fig. 1 calculates the Vapos value.
Fig. 7 is a graph showing a function for calculating criterion values in a low-speed region LVR.
Fig. 8 is a graph showing a function for calculating criterion values in a medium-speed region MVR.
Fig. 9 is a graph showing a function for calculating criterion values in a high-speed region HVR.
Fig. 10 is a flowchart showing a series of processes executed by the data acquisition device of Fig. 1 when updating a pass rate OR.
Fig. 11 is a flowchart showing a series of processes in a counting process executed by the data acquisition device of Fig. 1.
Fig. 12 is a flowchart showing a series of processes executed by the data acquisition device of Fig. 1 when determining whether the pass rate OR satisfies a performance condition.
Fig. 13 is a flowchart showing a series of processes executed by the data acquisition device of Fig. 1 when determining whether the manner in which the vehicle performance test is conducted satisfies the performance condition.
Fig. 14 is a flowchart showing a series of processes in a counting process executed by a data acquisition device according to a second embodiment.
Fig. 15 is a flowchart showing a series of processes executed by the data acquisition device of the second embodiment when determining whether the pass rate OR satisfies the performance condition.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

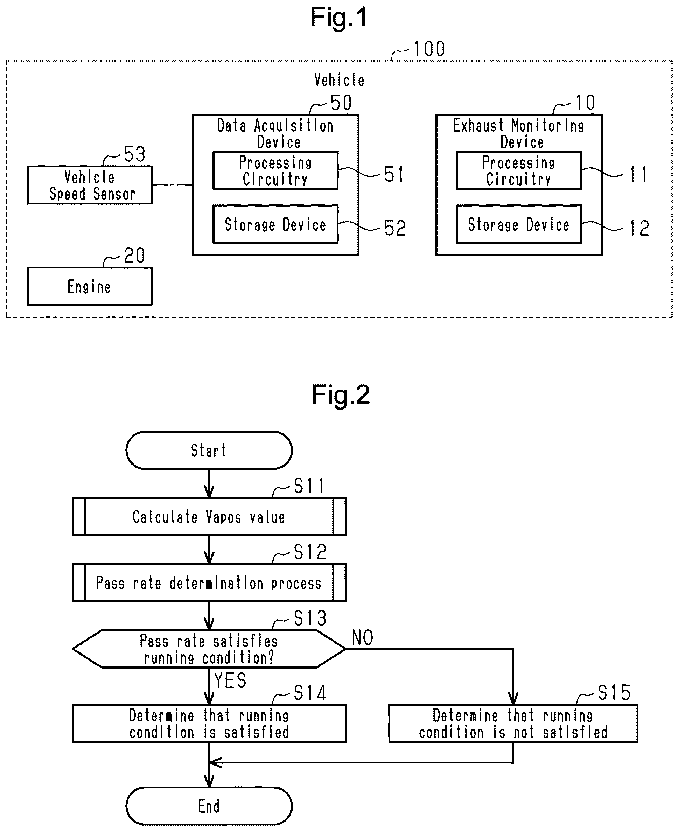

Figs. 1 to 13 illustrate a data acquisition device, a data acquisition method, a data acquisition process, a storage medium, a program product, and a program according to a first embodiment of the present disclosure.

### Structure of Vehicle 100

As shown in Fig. 1, a vehicle 100 includes an exhaust monitoring device 10, an engine 20, a data acquisition device 50, and a vehicle speed sensor 53. The data acquisition device 50 and the exhaust monitoring device 10 are implemented by at least one of one or multiple electronic control units of the vehicle 100.

As shown in Fig. 1, the data acquisition device 50 includes processing circuitry 51 and a storage device 52. The storage device 52 is a data acquisition memory module storing programs or program codes. The processing circuitry 51 is a data acquisition processing circuit that executes various kinds of processes by executing programs or program codes stored in the storage device 52. The processing circuitry 51 includes a processor.

As shown in Fig. 1, the data acquisition device 50 is communicably connected to the vehicle speed sensor 53. The vehicle speed sensor 53 measures a traveling speed of the vehicle 100. Specifically, the vehicle speed sensor 53 outputs the traveling speed of the vehicle 100 every second based on the rotational speed of the output shaft of the vehicle 100. The data acquisition device 50 periodically acquires the traveling speed of the vehicle 100 from the vehicle speed sensor 53 while the vehicle 100 is traveling. That is, the data acquisition device 50 acquires the traveling speed multiple times.

As shown in Fig. 1, the exhaust monitoring device 10 includes exhaust monitoring processing circuitry 11 and an exhaust monitoring storage device 12. The exhaust monitoring storage device 12 stores programs or program codes. The exhaust monitoring processing circuitry 11 executes various kinds of processes by executing programs or program codes stored in the exhaust monitoring storage device 12. The exhaust monitoring processing circuitry 11 includes a processor.

The exhaust monitoring device 10 monitors components of exhaust gas of the engine 20. The exhaust monitoring device 10 acquires information on components of exhaust gas of the engine 20 from various sensors. For example, the exhaust monitoring device 10 acquires the concentration of nitrogen oxides contained in the exhaust gas from a nitrogen oxide sensor installed in an exhaust pipe of the engine 20.

### Outline of Vehicle Performance Test

A vehicle performance test on a road such as a public road is required to be conducted to satisfy a predetermined performance condition. The data acquisition device 50 acquires the traveling speed of the vehicle 100 during the vehicle performance test. The data acquisition device 50 determines whether the manner in which the vehicle performance test of the vehicle 100 is conducted satisfies a specified performance condition based on the acquired traveling speed.

Specifically, the data acquisition device 50 calculates a reference value based on the acquired traveling speed. Thereafter, the data acquisition device 50 calculates a calculated value based on the reference value, and determines whether the manner in which the vehicle performance test of the vehicle 100 is conducted satisfies the specified performance condition based on the calculated value. The reference value and the calculated value will be described later. When the data acquisition device 50 determines that the manner in which the vehicle performance test of the vehicle 100 is conducted satisfies the specified performance condition, the exhaust monitoring device 10 analyzes components in exhaust gas discharged from the vehicle 100 during the vehicle performance test.

The exhaust monitoring device 10 monitors components of exhaust gas discharged during the vehicle performance test of the vehicle 100, and stores information on the components in the storage device 12. The exhaust monitoring device 10 analyzes the components in the exhaust gas discharged by the vehicle 100 during the vehicle performance test based on the information on the components of the exhaust gas acquired during the vehicle performance test.

### Determination of Whether the Performance Condition is Satisfied in Comparative Example

Figs. 2 to 4 illustrate a manner in which a data acquisition device of a comparative example determines whether the manner in which the vehicle performance test of the vehicle 100 is conducted satisfies the specified performance condition. The data acquisition device of the comparative example is mounted on the vehicle 100 shown in Fig. 1. In the comparative example described below, the data acquisition device differs from the data acquisition device 50 of Fig. 1 in that it is implemented as an external device mounted on the vehicle 100, rather than as one or more electronic control units that are components of the vehicle 100. Hereinafter, the data acquisition device of the comparative example is referred to as an external device.

The external device periodically acquires the traveling speed of the vehicle 100 from the vehicle speed sensor 53 during the vehicle performance test. The external device continues to store all the traveling speeds acquired during the vehicle performance test in the storage device until the end of the vehicle performance test

Fig. 2 shows a series of processes executed by the external device to determine whether the manner in which the vehicle performance test of the vehicle 100 is conducted satisfies the performance condition. The external device executes a series of processes shown in Fig. 2 after the vehicle performance test of the vehicle 100 has ended. Hereinafter, in Fig. 2, S denotes a step.

When the series of processes shown in Fig. 2 is started, the external device first executes the process of S11. In the process of S11, the external device calculates a Vapos value.

The Vapos value is a product of the traveling speed of the vehicle 100 and the acceleration of the vehicle 100 during the vehicle performance test. **In** the Vapos value, the symbol 'V' denotes the initial of 'velocity.' In the Vapos value, the second letter 'a' denotes 'acceleration.' In the Vapos value, the last three letters 'pos' denotes 'positive.' The Vapos value is a reference value used for determining whether the manner in which the vehicle performance test of the vehicle 100 is conducted satisfies the performance condition.

### Method for Calculating Vapos Value in Comparative Example

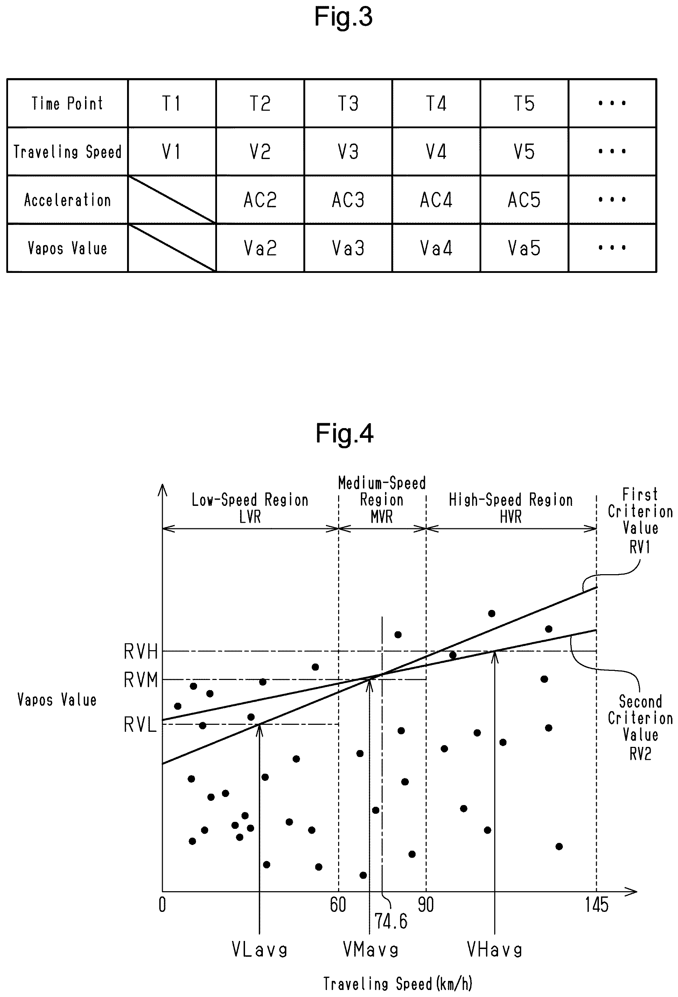

Fig. 3 is a table showing combinations of time points at which traveling speeds are acquired by the external device, traveling speeds of vehicle 100, accelerations of the vehicle 100, and Vapos values. Hereinafter, a manner in which the external device calculates the Vapos values will be described with reference to Fig. 3.

In Fig. 3, time points at which the external device acquires the traveling speeds are represented by symbols each composed of a combination of the letter T and a numeral. In Fig. 3, the numeral appended after T corresponds to a number of times the external device has acquired the traveling speed. For example, T1 indicates a time point at which the external device first acquires a traveling speed of the vehicle 100 during the vehicle performance test.

In Fig. 3, traveling speeds of the vehicle 100 are represented by symbols each composed of a combination of the letter V and a numeral. In Fig. 3, the numeral appended after V corresponds to the time point at which the traveling speed is acquired. For example, V1 indicates the traveling speed of the vehicle 100 acquired by the external device at the time point T1.

In Fig. 3, accelerations of the vehicle 100 are represented by symbols each composed of a combination of the letters AC and a numeral. In Fig. 3, the numeral appended after AC corresponds to the time point at which the traveling speed is acquired. For example, AC2 is the acceleration of the vehicle 100 at a time point T2.

When calculating an acceleration at a given time point, the external device calculates the acceleration at the time point based on a traveling speed acquired at a measurement immediately preceding the time point and a traveling speed acquired at a measurement immediately following the time point. For example, when the external device calculates AC2, the external device calculates AC2 as shown in Equation 1 below.
$AC 2 = \frac{V 3 - V 1}{MT}$ Equation 1

In Equation 1 above, MT is a measurement time required from when the vehicle speed sensor 53 acquires a traveling speed one measurement before a given time point until when the vehicle speed sensor 53 acquires a traveling speed one measurement after that given time point. As described above, the vehicle speed sensor 53 outputs a traveling speed every second. Thus, in Equation 1, MT, which is the measurement time from the time point T1, at which V1 is acquired, to a time point T3, at which V3 is acquired, is two seconds. In this manner, when the external device calculates the acceleration at a given time point, the external device calculates the acceleration at that time point by dividing, by the measurement time, the difference between a traveling speed acquired one measurement after that time point and a traveling speed acquired one measurement before that time point.

In Fig. 3, the Vapos values are represented by symbols each composed of a combination of the letters Va and a numeral. In Fig. 3, the numeral appended after Va corresponds to the time at which the traveling speed is acquired. For example, Va2 is the product of V2, which is the traveling speed at the time point T2, and AC2, which is the acceleration at the time point T2. The external device calculates a Vapos value by multiplying the traveling speed of the vehicle 100 by the acceleration at the time point of acquisition of the traveling speed.

The external device first calculates the accelerations corresponding to all the traveling speeds stored in the storage device in the process of S11 after the end of the vehicle performance test. That is, the external device calculates accelerations corresponding to all time points from the time point T2 onward during the vehicle performance test. Thereafter, the external device calculates Vapos values corresponding to all time points from the time point T2 onward during the vehicle performance test.

### Pass Rate Determination Process

As shown in Fig. 2, the external device executes the process of S11, and then executes the process of S12. In the process of S12, the external device executes a pass rate determination process.

The external device calculates, as the pass rate, a ratio of the number of Vapos values that are less than or equal to a criterion value to the number of all the Vapos values calculated based on all the traveling speeds acquired throughout the vehicle performance test. In other words, the pass rate is a calculated value obtained by the external device based on the Vapos values serving as reference values.

Fig. 4 illustrates a manner in which the external device executes the pass rate determination process.

Fig. 4 is a scatter diagram showing the relationship between traveling speeds acquired by the external device through a vehicle performance test and Vapos values calculated based on the traveling speeds.

Fig. 4 shows three speed regions. As shown in Fig. 4, the speed regions include a low-speed region LVR, a medium-speed region MVR, and a high-speed region HVR. The low-speed region LVR is a speed region in a range of 60 km/h or less. The medium-speed region MVR is a speed region in a range greater than 60 km/h and 90 km/h or less. The high-speed region HVR is a speed region in a range greater than 90 km/h and 145 km/h or less. In Fig. 4, points indicating the relationship between traveling speed and Vapos value are plotted within one of the three speed regions depending on the traveling speed.

The external device calculates the criterion value for each speed region based on traveling speeds acquired during the vehicle performance test. In each speed region, the external device compares the Vapos values plotted within the speed region with the calculated criterion value.

Fig. 4 shows, in addition to points indicating the relationship between traveling speeds and Vapos values, lines indicating functions for calculating two criterion values, namely, a first criterion value and a second criterion value.

The function for calculating the first criterion value is expressed by Equation 2 below, where RV1 denotes the first criterion value, and Vavg denotes an average vehicle speed.
$RV 1 = 0 . 136 \times Vavg + 14 . 44$ Equation 2

The function for calculating the second criterion value is expressed by Equation 3 below, where RV2 denotes the second criterion value, and Vavg denotes an average vehicle speed.
$RV 2 = 0 . 0742 \times Vavg + 18 . 966$ Equation 3

The external device calculates, for each speed region, an average vehicle speed of traveling speeds plotted within the speed region. Fig. 4 shows an example of the average vehicle speed for each speed region calculated by the external device. In Fig. 4, VLavg denotes an average vehicle speed in the low-speed region LVR. In Fig. 4, VMavg denotes an average vehicle speed in the medium-speed region MVR. In Fig. 4, VHavg denotes an average vehicle speed in the high-speed region HVR. Hereinafter, a manner in which the external device calculates the pass rate when the external device has calculated an average vehicle speed shown in Fig. 4 will be described.

The external device determines the criterion value for each speed region by substituting the average vehicle speed in each speed region into Equation 2 or Equation 3. When the calculated average vehicle speed is less than or equal to 74.6 km/h, the external device outputs the first criterion value RV1 by substituting the calculated average vehicle speed into Equation 2 shown above. When the calculated average vehicle speed is greater than 74.6 km/h, the external device outputs the second criterion value RV2 by substituting the calculated average vehicle speed into Equation 3 shown above.

In the example shown in Fig. 4, VLavg, which denotes the average vehicle speed in the low-speed region LVR, is less than or equal to 74.6 km/h. In the example of Fig. 4, the external device outputs the first criterion value RV1 by substituting VLavg into Equation 2. The criterion value RVL in Fig. 4 is the first criterion value RV1 output by substituting VLavg into Equation 2. That is, in the case of Fig. 4, RVL is the criterion value of the low-speed region LVR.

In the example shown in Fig. 4, VMavg, which denotes the average vehicle speed in the medium-speed region MVR, is less than or equal to 74.6 km/h. In the example of Fig. 4, the external device outputs the first criterion value RV1 by substituting VMavg into Equation 2. The criterion value RVM in Fig. 4 is the first criterion value RV1 output by substituting the VMavg into Equation 2. That is, in the example of Fig. 4, RVM is the criterion value of the medium-speed region MVR.

In the example shown in Fig. 4, the average vehicle speed VHavg in the high-speed region HVR is greater than 74.6 km/h. In the example of Fig. 4, the external device outputs the second criterion value RV2 by inputting a VHavg to Equation 3 above. The criterion value RVH in Fig. 4 denotes the second criterion value RV2 output by substituting VHavg into Equation 3. That is, in the example of Fig. 4, RVH is the criterion value of the high-speed region HVR.

In the pass rate determination process, the external device calculates the criterion value in each speed region and then determines whether the pass rate in each speed region is greater than or equal to a threshold. In the comparative example, the threshold is 95%. In the pass rate determination process, the external device determines, for each speed region, whether the ratio of the number of Vapos values plotted within the speed region that are less than or equal to the criterion value for the speed region to the total number of the Vapos values plotted within the speed region is greater than or equal to 95%.

In order to determine whether the pass rate is greater than or equal to the threshold, the external device arranges the Vapos values plotted within each speed region in ascending order. When the Vapos value located at the 95th percentile among the Vapos values plotted within each speed region is at or below the criterion value for the speed region, the external device determines that the pass rate in that speed region is greater than or equal to the threshold.

Specifically, in order to determine whether the pass rate in the low-speed region LVR is greater than or equal to the threshold, the external device arranges the Vapos values plotted within the low-speed region LVR in ascending order. When the Vapos value located at the 95th percentile among the Vapos values plotted within the low-speed region LVR is at or below RVL of Fig. 4, the external device determines that the pass rate in the low-speed region LVR is greater than or equal to the threshold.

In order to determine whether the pass rate in the medium-speed region MVR is greater than or equal to the threshold, the external device arranges the Vapos values plotted within the medium-speed region MVR in ascending order. When the Vapos value located at the 95th percentile among the Vapos values plotted within the medium-speed region MVR is at or below RVM of Fig. 4, the external device determines that the pass rate in the medium-speed region MVR is greater than or equal to the threshold.

In order to determine whether the pass rate in the high-speed region HVR is greater than or equal to the threshold, the external device arranges the Vapos values plotted within the high-speed region HVR in ascending order. When the Vapos value located at the 95th percentile among the Vapos values plotted within the high-speed region HVR is at or below RVH of Fig. 4, the external device determines that the pass rate in the high-speed region HVR is greater than or equal to the threshold.

### Performance Condition Determination Based on Pass Rate

As shown in Fig. 2, after executing the pass rate determination process, the external device advances the process to S13. In the process of S13, the external device determines whether the pass rate satisfies the performance condition.

In the process of S13, the external device determines that the pass rate satisfies the performance condition when it is determined that the pass rate is greater than or equal to the threshold in all the speed regions. In the process of S13, the external device determines that the pass rate does not satisfy the performance condition when it is determined that the pass rate in at least one speed region is less than the threshold.

When the external device determines that the pass rate satisfies the performance condition in the process of S13 (S13: YES), the external device advances the process to S14. In the process of S14, the external device determines that the manner in which the vehicle performance test of the vehicle 100 is conducted satisfies the performance condition. Thereafter, the external device ends the series of processes illustrated in Fig. 2.

When determining that the pass rate does not satisfy the performance condition in the process of S13 (S13: NO), the external device advances the process to S15. **In** the process of S15, the external device determines that the manner in which the vehicle performance test of the vehicle 100 is conducted does not satisfy the performance condition. Thereafter, the external device ends the series of processes illustrated in Fig. 2.

As described above, when determining that the performance condition is satisfied in the determination based on the pass rate, the external device determines that the manner in which the vehicle performance test of the vehicle 100 is conducted satisfies the performance condition.

The external device must continue storing, in a storage device until the vehicle performance test ends, all traveling speeds acquired during the vehicle performance test. This is required so that, after the vehicle performance test has ended, the external device can determine, in the manner shown in Fig. 2, whether the manner in which the vehicle performance test of the vehicle 100 is conducted satisfies performance condition. **In** this case, the external device needs to allocate a relatively large storage capacity. Therefore, it is difficult for one or more electronic control units that are components of the vehicle 100 to function as the external device.

### Determination of Whether Performance Condition Is Satisfied by the Data Acquisition Device 50

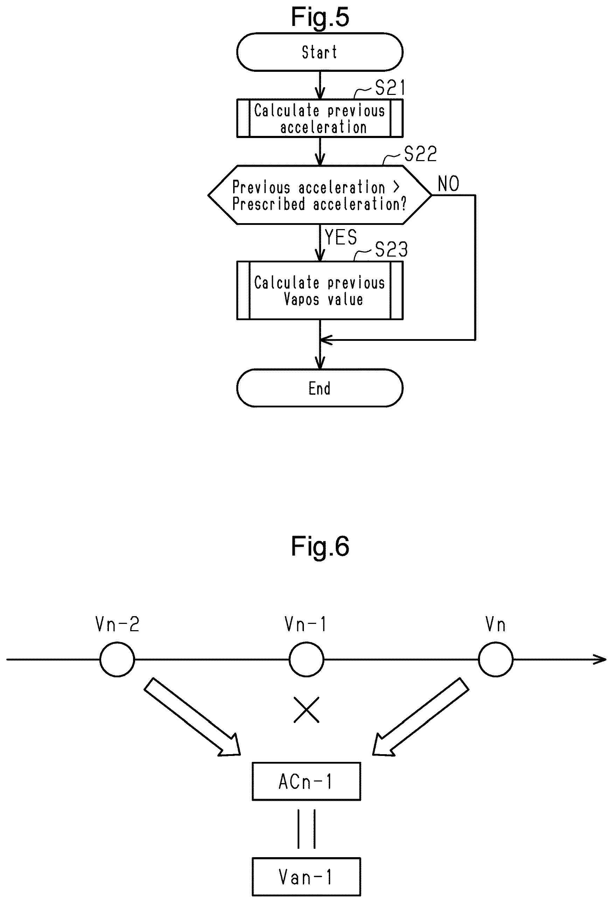

The data acquisition device 50 is capable of determining whether the manner in which the vehicle performance test is conducted satisfies the performance condition while reducing the amount of data to be stored as compared with the comparative example described above. Hereinafter, a manner in which the data acquisition device 50 determines whether the manner in which the vehicle performance test is conducted satisfies the performance condition will be described with reference to Figs. 5 to 13.

### Manner in Which the Data Acquisition Device 50 Calculates Vapos Value

Fig. 5 shows a series of processes executed by the data acquisition device 50 when calculating the Vapos value. The series of processes shown in Fig. 5 is executed by the processing circuitry 51 when the traveling speed is acquired from the vehicle speed sensor 53 during the vehicle performance test of the vehicle 100. **In** Fig. 5, S denotes a step.

When the series of processes shown in Fig. 5 is started, the processing circuitry 51 first executes the process of S21. In the process of S21, the processing circuitry 51 calculates a previous acceleration ACn-1.

Fig. 6 illustrates a manner in which the processing circuitry 51 calculates a Vapos value.

In Fig. 6, Vn-2 is the traveling speed of the vehicle 100 acquired two measurements earlier by the processing circuitry 51. That is, with reference to the traveling speed acquired at the start of the series of processes shown in Fig. 5, Vn-2 is the traveling speed acquired two measurements prior thereto. In other words, Vn-2 is a speed acquired two measurements earlier.

In Fig. 6, Vn-1 is the traveling speed of the vehicle 100 that was acquired in the preceding measurement by the processing circuitry 51. That is, with reference to the traveling speed acquired at the start of the series of processes shown in Fig. 5, Vn-1 is the traveling speed acquired one measurement prior thereto. In other words, Vn-1 is the previously acquired speed.

In Fig. 6, Vn is the traveling speed of the vehicle 100 acquired in the current measurement by the processing circuitry 51. That is, Vn is the traveling speed acquired at the start of the series of processes shown in Fig. 5. In other words, Vn is a currently acquired speed.

As described with reference to Fig. 3, the Vapos value is the product of a traveling speed and an acceleration at the time point of acquisition of that traveling speed. In the process of S21, the processing circuitry 51 calculates the acceleration of the vehicle 100 at the time point at which the previously acquired speed was acquired. At this time, as shown in Fig. 6, the processing circuitry 51 calculates the previous acceleration ACn-1 based on Vn-2 and Vn in the same manner as in the above Equation 1.

After calculating the previous acceleration, the processing circuitry 51 advances the process to S22. In the process of S22, the processing circuitry 51 determines whether the previous acceleration is greater than a prescribed acceleration. The prescribed acceleration is, for example, 0.1 m/s².

When determining in the process of S22 that the previous acceleration is greater than the prescribed acceleration (S22: YES), the processing circuitry 51 advances the process to S23. In the process of S23, the processing circuitry 51 calculates a previous Vapos value. At this time, as shown in Fig. 6, the processing circuitry 51 calculates, as the previous Vapos value, the product of the previously acquired speed Vn-1 and the previous acceleration ACn-1 already calculated in S21. Then, the processing circuitry 51 ends the series of processes illustrated in Fig. 5.

In this manner, the processing circuitry 51 calculates the previous Vapos value as a reference value each time the traveling speed is acquired during the vehicle performance test.

When determining that the previous acceleration is less than or equal to the prescribed acceleration in the process of S22 (S22: NO), the processing circuitry 51 ends the series of processes shown in Fig. 5. That is, the processing circuitry 51 does not calculate the Vapos value when the previous acceleration is less than or equal to the prescribed acceleration (S22: NO).

### Outline of Pass Rate OR Calculated by the Data Acquisition Device 50

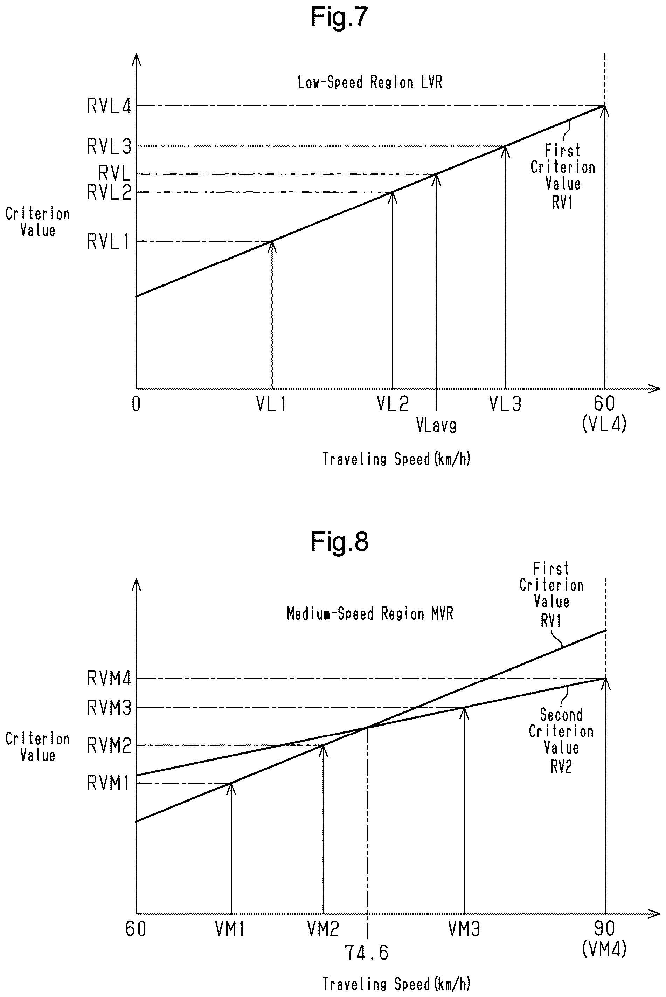

Unlike the pass rate of the external device, the data acquisition device 50 calculates, as a pass rate OR, the ratio of the number of Vapos values less than or equal to a provisional criterion value in a speed region to the number of the Vapos values belonging to the speed region. The pass rate OR is a calculated value acquired by the data acquisition device 50 based on the Vapos values serving as reference values. Hereinafter, the pass rate OR calculated by the data acquisition device 50 will be described with reference to Figs. 7 to 9.

As described above, criterion values in a speed region are calculated by inputting the average vehicle speed in the speed region into a function for calculating the first criterion value or a function for calculating the second criterion value.

The provisional criterion values are values determined in advance from among multiple values output by functions for calculating criterion values in the speed region. Multiple provisional criterion values are defined for each speed region.

Fig. 7 is a graph showing a function for calculating criterion values in the low-speed region LVR shown in Fig. 4. The low-speed region LVR is a speed region in a range of 60 km/h or less. Therefore, the average vehicle speed in the low-speed region LVR is always less than or equal to 74.6 km/h. Accordingly, Fig. 7 shows, as the function for calculating criterion values in the low-speed region LVR, only a straight line showing the function for calculating the first criterion value RV1.

In Fig. 7, four provisional criterion values of RVL1 to RVL4 are defined. RVL1 is the first criterion value RV1, which is output when VL1 in Fig. 7 is input as an average vehicle speed into Equation 2. RVL2 is the first criterion value RV1, which is output when VL2 in Fig. 7 is input as an average vehicle speed into Equation 2. RVL3 is the first criterion value RV1, which is output when VL3 in Fig. 7 is input as an average vehicle speed into Equation 2. RVL4 is the first criterion value RV1, which is output when VL4 in Fig. 7 is input as an average vehicle speed into Equation 2. In Fig. 7, the speed becomes lower in the order VL4, VL3, VL2, and VL1. In Fig. 7, the provisional reference values become smaller in the order RVL4, RVL3, RVL2, and RVL1.

As shown in Equations 2 and 3, a function for calculating criterion values calculates a larger criterion value as the substituted traveling speed increases. In Fig. 7, VL4 is 60 km/h as the maximum value of the speed in the low-speed region LVR. Accordingly, RVL4 is the maximum value of the criterion value output in the low-speed region LVR.

Fig. 8 is a graph showing a function for calculating criterion values in the medium-speed region MVR shown in Fig. 4. The medium-speed region MVR is a speed region in a range greater than 60 km/h and 90 km/h or less. In a region within the medium-speed region MVR where the average vehicle speed is less than or equal to 74.6 km/h, the first criterion value RV1 is calculated based on the average vehicle speed. In a region within the medium-speed region MVR where the average vehicle speed is greater than 74.6 km/h, the second criterion value RV2 is calculated based on the average vehicle speed. Accordingly, Fig. 8 shows, as the function for calculating the criterion value in the medium-speed region MVR, both the straight line indicating the function for calculating the first criterion value RV1 and the straight line indicating the function for calculating the second criterion value RV2.

In Fig. 8, four provisional criterion values of RVM1 to RVM4 are defined. RVM1 is the first criterion value RV1, which is output when VM1 in Fig. 8 is input as an average vehicle speed into Equation 2. RVM2 is the first criterion value RV1, which is output when VM2 in Fig. 8 is input as an average vehicle speed into Equation 2. RVM3 is the second criterion value RV2, which is output when VM3 in Fig. 8 is input as an average vehicle speed into Equation 3. RVM4 is the second criterion value RV2, which is output when VM4 in Fig. 8 is input as an average vehicle speed into Equation 3. In Fig. 8, the speed becomes lower in the order VM4, VM3, VM2, and VM1. In Fig. 8, the provisional reference values become smaller in the order RVM4, RVM3, RVM2, and RVM1.

In Fig. 8, VM4 is 90 km/h as the maximum value of the speed in the medium-speed region MVR. Accordingly, RVM4 is the maximum value of the criterion value output in the medium-speed region MVR.

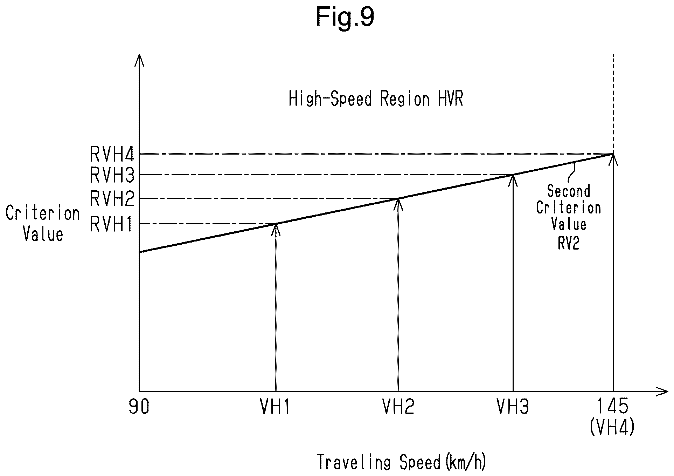

Fig. 9 is a graph showing a function for calculating criterion values in the high-speed region HVR shown in Fig. 4. The high-speed region HVR is a speed region in a range greater than 90 km/h and 145 km/h or less. Therefore, the average vehicle speed in the high-speed region HVR is always greater than 74.6 km/h. Accordingly, Fig. 9 shows, as the function for calculating criterion values in the high-speed region HVR, only a straight line showing the function for calculating the second criterion value RV2.

In Fig. 9, four provisional criterion values of RVH1 to RVH4 are defined. RVH1 is the second criterion value RV2, which is output when VH1 in Fig. 9 is input as an average vehicle speed into Equation 3. RVH2 is the second criterion value RV2, which is output when VH2 in Fig. 9 is input as an average vehicle speed into Equation 3. RVH3 is the second criterion value RV2, which is output when VH3 in Fig. 9 is input as an average vehicle speed into Equation 3. RVH4 is the second criterion value RV2, which is output when VH4 in Fig. 9 is input as an average vehicle speed into Equation 3. In Fig. 9, the speed becomes lower in the order VH4, VH3, VH2, and VH1. In Fig. 9, the provisional reference values become smaller in the order RVH4, RVH3, RVH2, and RVH1.

In Fig. 9, VH4 is 145 km/h as the maximum value of the speed in the high-speed region HVR. Accordingly, RVH4 is the maximum value of the criterion value output in the high-speed region HVR.

In Figs. 7 to 9, four provisional criterion values are defined for each speed region. The provisional criterion values defined for each speed region are not limited to those shown in Figs. 7 to 9. Each speed region may have two provisional criterion values, three provisional criterion values, or five or more provisional criterion values. Further, the number of provisional criterion values may differ among the speed regions.

The data acquisition device 50 compares the calculated Vapos values with multiple provisional criterion values in the speed region to which the Vapos value belongs. The data acquisition device 50 calculates the pass rate OR for each provisional criterion value.

### Manner in Which the Data Acquisition Device 50 Updates the Pass Rate OR

Each time a Vapos value is calculated, the data acquisition device 50 compares the Vapos value with the provisional criterion values, and calculates the pass rate OR. Each time the pass rate OR is calculated, the data acquisition device 50 updates the pass rate OR stored in the storage device 52.

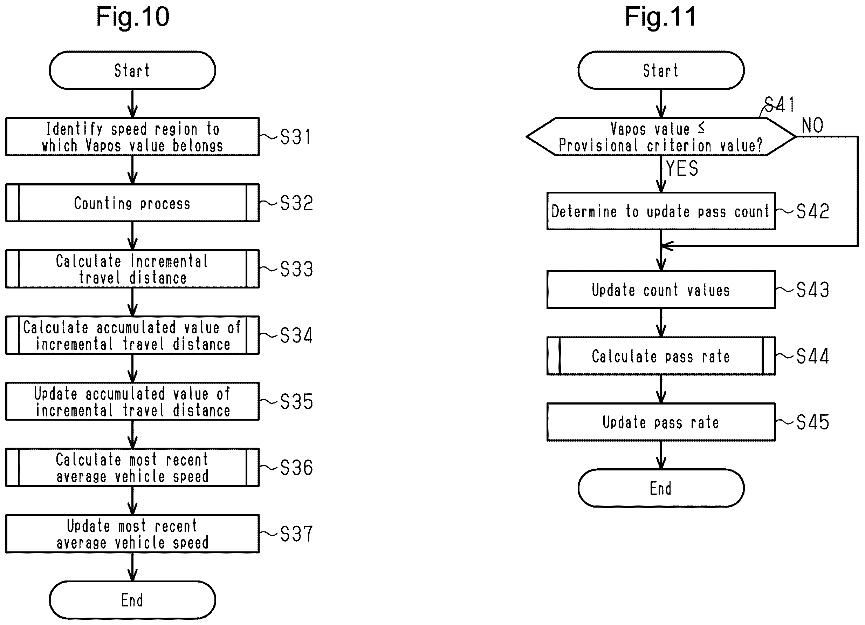

Fig. 10 shows a series of processes executed by the data acquisition device 50 when updating the pass rate OR. The series of processes illustrated in Fig. 10 is executed by the processing circuitry 51. The processing circuitry 51 executes the series of processes shown in Fig. 10 each time a Vapos value is calculated during the vehicle performance test of the vehicle 100. In other words, the processing circuitry 51 executes the series of processes illustrated in Fig. 10 after executing the process of S23 in Fig. 5. Therefore, the processing circuitry 51 does not execute the series of processes shown in Fig. 10 when determining that the previous acceleration is less than or equal to the prescribed acceleration in the process of S22 (S22: NO). In Fig. 10, S denotes a step.

Upon starting the series of processes illustrated in Fig. 10, the processing circuitry 51 first executes the process of S31. In the process of S31, the processing circuitry 51 identifies a speed region to which the calculated Vapos value belongs. In Fig. 5, the processing circuitry 51 calculates the previous Vapos value based on the previously acquired speed and the previous acceleration. In S31, the processing circuitry 51 identifies which of the speed regions shown in Figs. 7 to 9 the previously acquired speed belongs to.

Thereafter, the processing circuitry 51 executes the process of S32. In the process of S32, the processing circuitry 51 executes a counting process. The counting process is a process of comparing the Vapos values with the provisional thresholds and updating the calculated values.

Fig. 11 shows a series of processes executed by the data acquisition device 50 in the counting process. The series of processes illustrated in Fig. 11 is executed by the processing circuitry 51. In Fig. 11, S denotes a step.

The processing circuitry 51 executes a series of processes illustrated in Fig. 11 for each provisional criterion value in the speed region identified in the process of S31. For example, when the low-speed region LVR is identified as a region to which the Vapos values belong in the process of S31, and the four provisional criterion values RVL1 to RVL4 shown in Fig. 7 are defined in the low-speed region LVR, the processing circuitry 51 executes the series of processes shown in Fig. 11 once for each of the provisional criterion values RVL1 to RVL4.

Upon starting the counting process, the processing circuitry 51 first executes the process of S41. In the process of S41, the processing circuitry 51 determines whether the Vapos value calculated in the process of S23 is less than or equal to the provisional criterion value.

When determining that the Vapos value is less than or equal to the provisional criterion value in the process of S41 (S41: YES), the processing circuitry 51 advances the process to S42. In the process of S42, the processing circuitry 51 determines to update a pass count. The pass count is the number of Vapos values less than or equal to the provisional criterion value.

After the process of S42, the processing circuitry 51 advances the process to S43. When determining in the process of S41 that the Vapos value is greater than the provisional criterion value (S41: NO), the processing circuitry 51 also advances the process to S43. In the process of S43, the processing circuitry 51 updates a pair of count values as count values.

The data acquisition device 50 stores, in the storage device 52, a pair of count values for each provisional criterion value. The pair of count values is a combination of the number of Vapos values belonging to a speed region and a pass rate related to the provisional criterion value. In the process of S43, the processing circuitry 51 updates the pair of count values related to the provisional criterion value that has been compared with the Vapos value in the process of S41.

When executing the process of S43 after the process of S42, the processing circuitry 51 adds 1 to each of the pair of count values, namely, the number of the Vapos values belonging to the speed region and the pass count related to the provisional criterion value. When executing the process of S43 after determining that the Vapos value is greater than the provisional criterion value in the process of S41 (S41: NO), the processing circuitry 51 adds 1 only to the number of the Vapos values belonging to the speed region, which is one of the pair of count values. In other words, the pass count related to the provisional criterion value, which is one of the pair of count values, is not incremented in this case.

After updating the pair of count values, the processing circuitry 51 executes the process of S44. In the process of S44, the processing circuitry 51 calculates the pass rate OR related to the provisional criterion value compared with the Vapos value in the process of S41. At this time, the processing circuitry 51 calculates, as the pass rate OR, the ratio of the pass count related to the provisional criterion value to the number of multiple Vapos values belonging to the speed region.

Thereafter, the processing circuitry 51 executes the process of S45. In the process of S45, the processing circuitry 51 updates the pass rates OR stored in the storage device 52.

The storage device 52 stores the pass rate OR calculated during the vehicle performance test for each provisional criterion value. The processing circuitry 51 updates the pass rate OR, which is stored in the storage device 52 and related to the provisional criterion value compared with the Vapos value in the process of S41, to the pass rate OR calculated in the process of S44. Thereafter, the processing circuitry 51 ends the series of processes illustrated in Fig. 11.

In this manner, the data acquisition device 50 calculates the pass rate OR as a calculated value and updates the pass rate OR stored in the storage device 52 each time the traveling speed is acquired during the vehicle performance test of the vehicle 100.

### Processes Executed After Execution of Counting Process During Vehicle Performance Test

The processing circuitry 51 executes the counting process on all the provisional criterion values in the speed region identified in the process of S31, and then advances the process to S33. In the process of S33, the processing circuitry 51 calculates an incremental travel distance.

The incremental travel distance is a distance traveled by the vehicle 100 from when the data acquisition device 50 acquired the speed acquired two measurements earlier to when the data acquisition device 50 acquired the previously acquired speed. As described above, the vehicle speed sensor 53 outputs the traveling speed of the vehicle 100 every one second. Accordingly, the incremental travel distance is a distance traveled by the vehicle 100 in one second. For example, when Vn-1 in Fig. 6 is 60 km/h, the incremental distance from the time point of acquisition of Vn-2 to the time point of acquisition of Vn-1 is 1/3600 of 60 km. In the process of S33, the processing circuitry 51 calculates the incremental travel distance based on the speed previously acquired by the data acquisition device 50.

Thereafter, the processing circuitry 51 advances the process to S34. In the process of S34, the processing circuitry 51 calculates an accumulated incremental travel distance value. The storage device 52 stores an accumulated incremental travel distance value for each speed region during the vehicle performance test of the vehicle 100. In the process of S34, the processing circuitry 51 calculates the accumulated incremental travel distance value in the speed region that has been identified in the process of S31, based on the information stored in the storage device 52.

Thereafter, the processing circuitry 51 advances the process to S35. In the process of S35, the processing circuitry 51 updates the accumulated incremental travel distance value stored in the storage device 52. At this time, the processing circuitry 51 updates the accumulated incremental travel distance value in the speed region that has been identified in the process of S31, which has been stored in the storage device 52, with an accumulated value calculated in the process of S34.

Thereafter, the processing circuitry 51 executes the process of S36. The processing circuitry 51 calculates a most recent average vehicle speed in the process of S36.

The storage device 52 stores the average vehicle speed during the vehicle performance test for each speed region. In the process of S36, the processing circuitry 51 calculates the most recent average vehicle speed in the speed region that has been identified in the process of S31. The most recent average vehicle speed is calculated using Equation 4 below.
$VNavg = \left(V1\div NC\right) + \left\{VPavg\times \left(NC-1\right)\div NC\right\}$ Equation 4

In Equation 4, VNavg denotes the most recent average vehicle speed in the speed region which has been identified in the process of S31.

In Equation 4, V1 is the previously acquired traveling speed of the vehicle 100. That is, V1 corresponds to Vn-1 in Fig. 6. In other words, V1, i.e., Vn-1 is a subject traveling speed.

In Equation 4, VPavg denotes the average vehicle speed in the speed region that has been identified in the process of S31, which is currently stored in the storage device 52. That is, VPavg denotes the most recent average vehicle speed before V1 in Equation 4 is acquired.

In Equation 4 shown above, NC denotes a most recent calculation count of the average vehicle speed, including the current calculation. In other words, NC is the number of times traveling speeds belonging to the speed region that has been identified in the process of S31.

In Equation 4 shown above, NC-1 denotes the most recent calculation count of the average vehicle speed, not including the current calculation. In Equation 4, the product of VPavg and NC-1 denotes an accumulated traveling speed value excluding V1 in the speed region that has been identified in the process of S31. In other words, the product of VPavg and NC-1 is an accumulated value of multiple traveling speeds except for the subject traveling speed (V1) in the identified speed region. That is, VNavg of Expression 4 denotes the sum of a quotient obtained by dividing the subject traveling speed (V1) by the number of acquisitions (NC) of multiple traveling speeds in the identified speed region and a quotient obtained by dividing an accumulated value of multiple traveling speeds (VPavg × (NC-1)) excluding the subject traveling speed (V1) in the identified speed region by the number of acquisitions NC.

Thereafter, the processing circuitry 51 executes the process of S37. In the process of S37, the processing circuitry 51 updates the most recent average vehicle speed stored in the storage device 52. At this time, the processing circuitry 51 updates the most recent average vehicle speed in the speed region that has been identified in the process of S31 stored in the storage device 52. Then, the processing circuitry 51 ends the series of processes illustrated in Fig. 10.

### Performance Condition Determination Based on Pass Rate OR

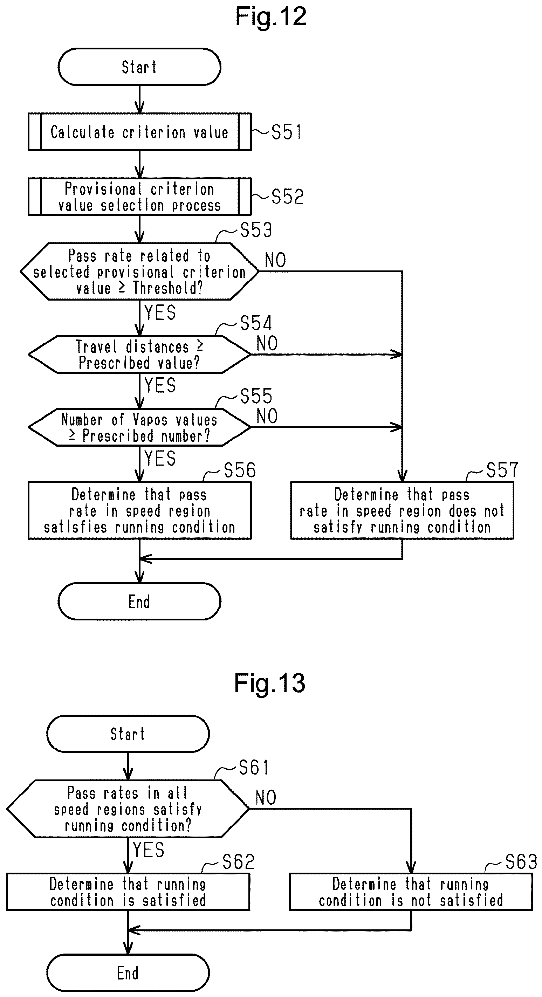

The data acquisition device 50 determines whether the pass rate satisfies the performance condition after the vehicle performance test performed by the vehicle 100 is ended. Fig. 12 shows a series of processes executed by the data acquisition device 50 when determining whether the pass rate OR satisfies the performance condition. The series of processes shown in Fig. 12 is executed by the processing circuitry 51 after the vehicle performance test of the vehicle 100 is ended. The processing circuitry 51 executes a series of processes shown in Fig. 12 for each speed region after the vehicle performance test by the vehicle 100 is ended. In Fig. 12, S denotes a step.

Upon starting the series of processes illustrated in Fig. 12, the processing circuitry 51 first executes the process of S51. In the process of S51, the processing circuitry 51 calculates a criterion value in a speed region.

As described with reference to Fig. 10, the storage device 52 stores the most recent average vehicle speed for each speed region. The average vehicle speed calculated last for each speed region during the vehicle performance test of the vehicle 100 is the average vehicle speed throughout the entire vehicle performance test in that speed region.

In the process of the S51, the processing circuitry 51 calculates the criterion value based on the most recent average vehicle speed stored in the storage device 52 after the vehicle performance test of the vehicle 100 is ended. Specifically, the processing circuitry 51 calculates the criterion value in the speed region by inputting the most recent average vehicle speed stored in the storage device 52 into Equation 2 or Equation 3.

Thereafter, the processing circuitry 51 executes the process of S52. **In** the S52 process, the processing circuitry 51 executes a provisional criterion value selection process.

The provisional criterion value selection process is a process of selecting a provisional criterion value for determining whether the pass rate OR satisfies the performance condition from multiple provisional criterion values defined for the speed region.

Fig. 7 illustrates a manner in which one selection criterion value is selected from provisional criterion values VL1 to VL4 in the low-speed region LVR.

Fig. 7 shows VLavg, which is the average vehicle speed in the low-speed region LVR, and RVL, which is the criterion value calculated based on VLavg. The processing circuitry 51 selects, as the selection criterion value, a provisional criterion value that is greater than or equal to the criterion value in the speed region and has the smallest value among the multiple provisional criterion values defined for the speed region. **In** the example shown in Fig. 7, the processing circuitry 51 selects RVL3 as the selection criterion value for determining whether the pass rate OR satisfies the performance condition.

Thereafter, the processing circuitry 51 executes the process of S53. In the process of S53, the processing circuitry 51 determines whether the pass rate OR related to the selection criterion value selected in the provisional criterion value selection process is greater than or equal to a threshold.

As described with reference to Fig. 11, the storage device 52 stores the pass rate OR for each provisional criterion value during the vehicle performance test by the vehicle 100. In the process of S53, the processing circuitry 51 checks the pass rate OR related to the selection criterion value selected in the provisional criterion value selection process, which is stored in the storage device 52. The processing circuitry 51 determines whether the pass rate OR related to the provisional criterion value is greater than or equal to the threshold. The threshold is 95%.

When determining that the pass rate OR related to the provisional criterion value is greater than or equal to the threshold in the process of S53 (S53: YES), the processing circuitry 51 advances the process to S54. In the process of S54, the processing circuitry 51 determines whether the travel distances of the vehicle 100 in all the speed regions are greater than or equal to a prescribed value.

As described with reference to Fig. 10, the storage device 52 stores the accumulated incremental travel distance value for each speed region during the vehicle performance test of the vehicle 100. The accumulated incremental travel distance value for each speed region represents the travel distance of the vehicle 100 for each speed region. In the process of S54, the processing circuitry 51 checks information of the accumulated incremental travel distance value stored in the storage device 52. The processing circuitry 51 determines whether the accumulated incremental travel distance value in the speed region is greater than or equal to the prescribed value. The prescribed value is, for example, 16 km.

The processing circuitry 51 determines that the travel distance of the vehicle 100 in the speed region is greater than or equal to the prescribed value when the accumulated incremental travel distance value in the speed region is greater than or equal to the prescribed value. When determining in the process of S54 that the travel distance in the speed region of the vehicle 100 is greater than or equal to the prescribed value (S54: YES), the processing circuitry 51 advances the process to S55. In the process of S55, the processing circuitry 51 determines whether the number of Vapos values in the speed region is greater than or equal to a prescribed number.

As described with reference to Fig. 11, the storage device 52 stores a pair of count values for each speed region during the vehicle performance test of the vehicle 100. In the process of S55, the processing circuitry 51 checks the information of the number of the Vapos values belonging to the speed region contained in the pair of count values. The processing circuitry 51 determines whether the number of Vapos values in the speed region is greater than or equal to the prescribed number.

When determining that the number of the Vapos values in the speed region is greater than or equal to the prescribed number in the process of S55 (S55: YES), the processing circuitry 51 advances the process to S56. In the process of S56, the processing circuitry 51 determines that the pass rate in the speed region satisfies the performance condition. Then, the processing circuitry 51 ends the series of processes illustrated in Fig. 12.

When determining that the pass rate OR related to the provisional criterion value is less than the threshold in the process of S53 (S53: NO), the processing circuitry 51 advances the process to S57.

In the process of S54, the processing circuitry 51 determines that the travel distance of the vehicle 100 in the speed region is less than the prescribed value when the accumulated incremental travel distance value in the speed region is less than the prescribed value. When determining in the process of S54 that the travel distance in the speed region of the vehicle 100 is less than the prescribed value (S54: NO), the processing circuitry 51 advances the process to S57.

When determining that the number of the Vapos values in the speed region is less than the prescribed number in the process of S55 (S55: NO), the processing circuitry 51 also advances the process to S57.

In the process of S57, the processing circuitry 51 determines that the pass rate in the speed region does not satisfy the performance condition. Then, the processing circuitry 51 ends the series of processes illustrated in Fig. 12.

In this manner, when the traveling speed has been acquired during the vehicle performance test of the vehicle 100, the data acquisition device 50 calculates the pass rate OR for each provisional criterion value and updates the pass rate stored in the storage device 52 for each provisional criterion value. The data acquisition device 50 determines whether the pass rate OR related to the selected provisional criterion value satisfies the performance condition after the vehicle performance test of the vehicle 100 is ended.

When the pass rate OR related to the provisional criterion value is employed, a value greater than the criterion value may be compared with the Vapos value. Accordingly, the pass rate OR calculated by the data acquisition device 50 tends to be output as a higher value than the pass rate OR calculated by an external device. Consequently, use of the data acquisition device 50 makes it more likely that the performance condition will be determined to be satisfied than when an external device is used.

On the other hand, when the Vapos value is relatively large, exhaust components such as nitrogen oxides are more likely to be emitted. In a case in which the Vapos value is relatively large, when the exhaust composition analysis is performed after the data acquisition device 50 determines that the performance condition is satisfied based on the calculated pass rate OR, the exhaust composition is analyzed including the data acquired when the vehicle 100 was traveling in a mode in which the composition such as nitrogen oxides is readily discharged. In other words, the analysis result of the exhaust analysis executed after the data acquisition device 50 determines that the performance condition is satisfied using the calculated pass rate OR may be worse than the analysis result of the exhaust analysis executed after the external device determines that the calculated pass rate OR satisfies the performance condition. Accordingly, in a case in which the exhaust component analysis is executed after the data acquisition device 50 determines that the calculated pass rate OR satisfies the performance condition, the exhaust gas is unlikely to satisfy the emission standards. Consequently, when the exhaust component analysis is executed after the data acquisition device 50 determines that the calculated pass rate OR satisfies the performance condition, it becomes easier to reduce the likelihood that a vehicle not meeting emission standards will pass evaluation by the exhaust component analysis and be sold.

### Final Determination by the Data Acquisition Device 50

After executing the performance condition determination based on the pass rate OR in each speed region, the data acquisition device 50 executes a final determination as to whether the manner in which the vehicle performance test of the vehicle 100 is conducted satisfies the performance condition. Fig. 13 shows a series of processes executed by the data acquisition device 50 when making a final determination. After the end of the vehicle performance test of the vehicle 100, the processing circuitry 51 executes the series of processes shown in Fig. 13 after executing the series of processes shown in Fig. 12 in all the speed regions.

Upon starting the series of processes illustrated in Fig. 13, the processing circuitry 51 first executes the process of S61. In the process of S61, the processing circuitry 51 determines that the pass rates in all the speed regions satisfy the performance condition.

As a result of executing the series of processes shown in Fig. 12 in each speed region, when the processing circuitry 51 executes the process of S56 in all the speed regions, the processing circuitry 51 determines that the pass rates OR in all the speed regions satisfy the performance condition (S61: YES). When determining that the pass rates OR in all the speed regions satisfy the performance condition in the process of S61 (S61: YES), the processing circuitry 51 advances the process to S62. In the process of the S62, the processing circuitry 51 makes a final determination that the manner in which the vehicle performance test of the vehicle 100 is conducted satisfies the performance condition. Thereafter, the processing circuitry 51 ends the series of processes illustrated in Fig. 13.

As a result of executing the series of processes shown in Fig. 12 in each speed region, when the processing circuitry 51 executes the process of S57 in at least one of the speed regions, the processing circuitry 51 determines that the pass rate OR does not satisfy the performance condition in all the speed ranges (S61: NO). When determining that the condition is not satisfied in the process of S61 (S61: NO), the processing circuitry 51 advances the process to S63. In the process of the S63, the processing circuitry 51 makes a final determination that the manner in which the vehicle performance test of the vehicle 100 is conducted does not satisfy the performance condition. Thereafter, the processing circuitry 51 ends the series of processes illustrated in Fig. 13.

### Operation of the First Embodiment

The data acquisition device 50 calculates an acceleration and calculates a Vapos value, which is a reference value, each time the traveling speed is acquired during the vehicle performance test. During the vehicle performance test, the data acquisition device 50 performs determination of comparing the Vapos value with a provisional criterion value, and sequentially updates the calculated values. After the end of the vehicle performance test, the data acquisition device 50 checks whether the acquired data is appropriate data acquired through the vehicle performance test satisfying the performance condition based on the calculated values.

In this manner, the data acquisition device 50 updates the calculated values used for the determination each time the traveling speed is acquired. Accordingly, the data acquisition device 50 only needs to store the updated calculated values. The data acquisition device 50 of the present embodiment does not need to continuously record all the data used for calculating the calculated value until the end of the vehicle performance test.

### Advantages of the First Embodiment

(1-1) The data acquisition device 50 can determine whether the manner in which the vehicle performance test is conducted satisfies the specified performance condition without requiring a relatively large storage capacity.

(1-2) The processing circuitry 51 selects, from among one or more provisional criterion values each being not less than the criterion value, the smallest provisional criterion value.

In other words, the data acquisition device 50 selects, from among one or more provisional criterion values each being not less than the criterion value, a provisional criterion value having a smallest value. Accordingly, the data acquisition device 50 can perform the determination based on the provisional criterion value closest to the criterion value.

(1-3) Each time a traveling speed is acquired during the vehicle performance test, the processing circuitry 51 calculates, based on the speed acquired two measurements earlier and the currently acquired speed, the acceleration of the vehicle 100 at the time point of acquiring the previously acquired speed. Each time a traveling speed is acquired during the vehicle performance test, the processing circuitry 51 calculates the reference value based on the previously acquired speed and the acceleration at the time point of acquiring the previously acquired speed.

(1-4) The processing circuitry 51 calculates an incremental travel distance each time a traveling speed is acquired during the vehicle performance test. The incremental travel distance is a distance traveled by the vehicle 100 from when the speed acquired two measurements earlier was acquired to when the previously acquired speed was acquired. Each time the traveling speed is acquired during the vehicle performance test, the processing circuitry 51 determines which speed region the previously acquired speed belongs to. Each time the traveling speed is acquired during the vehicle performance test, the processing circuitry 51 updates the accumulated incremental travel distance value, which has been calculated for the traveling speed belonging to the speed region stored in the storage device 52 for each speed region. After the vehicle performance test is ended, the processing circuitry 51 checks the information stored in the storage device 52. When the accumulated incremental travel distance value in at least any one of the speed regions is less than or equal to the prescribed value, the processing circuitry 51 determines that the manner in which the vehicle performance test is conducted does not satisfy the performance condition even if the ratios in all the speed regions are greater than or equal to the threshold.

During the vehicle performance test, data related to exhaust gas may be acquired. When the data acquisition device 50 determines that the performance condition is satisfied, exhaust gas analysis may be performed. The accumulated incremental travel distance value for each speed region represents the travel distance of the vehicle 100 for each speed region. If the travel distance of the vehicle 100 is relatively short, there may be insufficient evaluation material used for exhaust analysis for a period during which the vehicle 100 traveled at a traveling speed belonging to that speed region. Accordingly, in the present embodiment, when the accumulated incremental travel distance value in any speed region is relatively small, the data acquisition device 50 determines that the performance condition is not satisfied. Consequently, the data acquisition device 50 improves the accuracy of exhaust gas analysis.

(1-5) When the number of the reference values in any one of the speed regions is less than or equal to the prescribed number, the processing circuitry 51 determines that the manner in which the vehicle performance test is conducted does not satisfy the performance condition even when the ratios in all the speed regions are greater than or equal to the threshold.

During the vehicle performance test, data related to exhaust gas may be acquired. When the data acquisition device 50 determines that the performance condition is satisfied, exhaust gas analysis may be performed. If the number of the Vapos values stored for each speed region is relatively small, there may be insufficient evaluation material used for exhaust gas analysis for the period during which the vehicle 100 travels at a traveling speed belonging to that speed region, in which the number of the Vapos values is relatively small. In contrast, when the number of the reference values in any speed region is relatively small, the data acquisition device 50 of the present embodiment determines that the performance condition is not satisfied. Consequently, the data acquisition device 50 improves the accuracy of exhaust gas analysis.

(1-6) The processing circuitry 51 does not calculate the reference value when the acceleration at the time point of acquiring the previously acquired speed is less than or equal to the prescribed acceleration.

During the vehicle performance test, data related to exhaust gas is acquired. When the data acquisition device 50 determines that the performance condition is satisfied, exhaust gas analysis may be performed.

When the acceleration is relatively low, the Vapos value tends to be relatively small. If an excessively small Vapos value is included in the values to be evaluated, a determination based on the calculated value as to whether the performance condition is satisfied tends to result in a determination that the performance condition is satisfied.

However, when the acceleration is relatively low, the amount of nitrogen oxides emitted from the vehicle 100 decreases. Accordingly, if the vehicle 100 travels for an excessively long period of time in a state in which the acceleration is relatively low, it is difficult to accurately evaluate the influence of the exhaust gas emitted from the vehicle 100 on the environment.

In this regard, the data acquisition device 50 of the present embodiment does not calculate the Vapos value when the acceleration is less than or equal to the prescribed acceleration. When the data acquisition device 50 does not calculate the Vapos value, the traveling speed at the time of calculation of the acceleration is not determined based on the calculated value.

Accordingly, the data acquisition device 50 of the present embodiment is prevented from collecting inappropriate data that makes it difficult to correctly evaluate the impact of exhaust on the environment. Also, because the data acquisition device 50 does not calculate the Vapos values, values that would otherwise be calculated based on the Vapos values are also not calculated. This allows the data acquisition device 50 to reduce the number of arithmetic operations performed.

(1-7) The data acquisition device 50 is implemented by one or more onboard electronic control units of the vehicle 100. An electronic control unit can perform the function of the data acquisition device 50. Accordingly, during the vehicle performance test, the data acquisition device 50 can readily determine whether the manner in which the vehicle performance test is conducted satisfies the performance condition without using an external device capable of storing a relatively large amount of data.

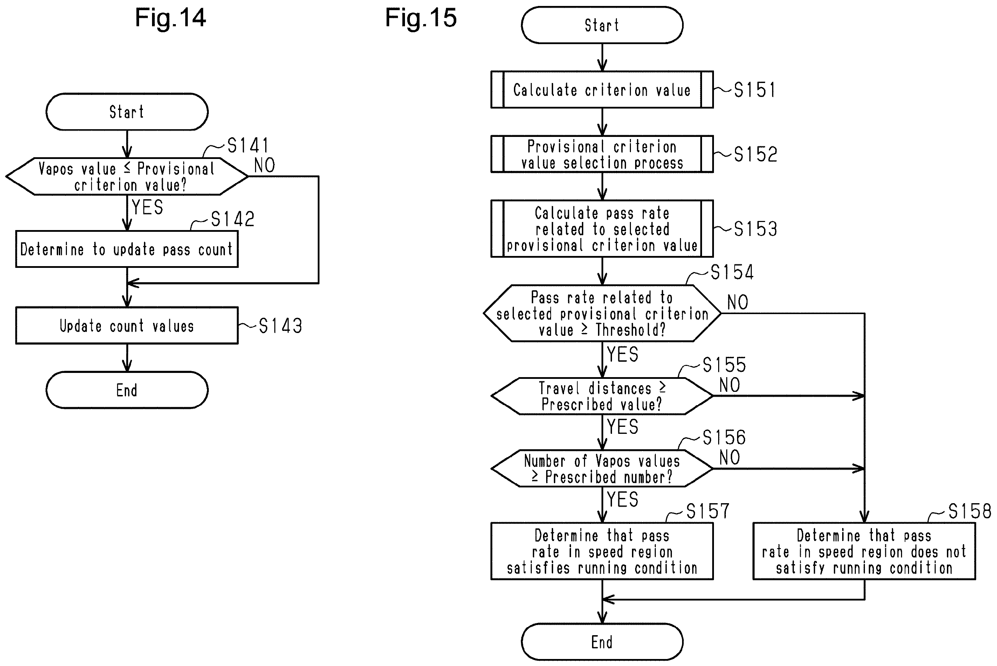

Figs. 14 and 15 illustrate a data acquisition device according to a second embodiment of the present disclosure. Unlike the first embodiment, the data acquisition device 50 of the second embodiment updates the pair of count values as calculated values during the vehicle performance test of the vehicle 100. The description hereafter will focus on the differences from the first embodiment, and the same aspects will not be described in detail. For example, the data acquisition device 50 of the second embodiment does not execute steps S33 to S35 of Fig. 10. Steps S31 to S32 and S36 to S37 of Fig. 10 are executed.

### Manner in Which Counting Process Is Executed

Fig. 14 shows a series of processes executed by the data acquisition device 50 of the second embodiment in the counting process. In the process of S32 of Fig. 10, the data acquisition device 50 of the second embodiment executes a series of processes shown in Fig. 14 instead of the series of processes shown in Fig. 11. The series of processes illustrated in Fig. 14 is executed by the processing circuitry 51. In Fig. 14, S denotes a step.

In the counting process, the processing circuitry 51 executes a series of processes illustrated in Fig. 14 for each provisional criterion value in the speed region identified in the process of S31. For example, when the low-speed region LVR is identified as a region to which the Vapos value belongs in the process of S31, and the four provisional criterion values shown in Fig. 7 are defined for the low-speed region LVR, the processing circuitry 51 executes the series of processes shown in Fig. 14 once for each of RVL1 to RVL4.

Upon starting the counting process, the processing circuitry 51 first executes the process of S141. In the process of S141, the processing circuitry 51 determines whether the Vapos value calculated in the process of S23 is less than or equal to the provisional criterion value. This process is the same as the process executed by the processing circuitry 51 in the process of S41 of Fig. 11.

When determining that the Vapos value is less than or equal to the provisional criterion value in the process of S141 (S141: YES), the processing circuitry 51 advances the process to S142. In the process of S142, the processing circuitry 51 determines to update the pass count. This process is the same as the process executed by the processing circuitry 51 in the process of S42 of Fig. 11.

After the process of S142, the processing circuitry 51 advances the process to S143. When determining in the process of S141 that the Vapos value is greater than the provisional criterion value (S141: NO), the processing circuitry 51 also advances the process to S143. In the process of S143, the processing circuitry 51 updates the pair of count values. This process is the same as the process executed by the processing circuitry 51 in the process of S43 of Fig. 11. Thereafter, the processing circuitry 51 ends the series of processes illustrated in Fig. 14.

### Performance Condition Determination Based on Pass Rate OR

The data acquisition device 50 of the second embodiment determines whether the pass rate OR satisfies the performance condition after the vehicle performance test performed by the vehicle 100 is ended. Fig. 15 shows a series of processes executed by the data acquisition device 50 when determining whether the pass rate OR satisfies the performance condition. The series of processes shown in Fig. 15 is executed by the processing circuitry 51 after the vehicle performance test of the vehicle 100 is ended. The data acquisition device 50 of the second embodiment executes a series of processes shown in Fig. 15 instead of the series of processes shown in Fig. 12. The processing circuitry 51 executes a series of processes shown in Fig. 15 for each speed region after the vehicle performance test by the vehicle 100 is ended. **In** Fig. 15, S denotes a step.

Upon starting the series of processes illustrated in Fig. 15, the processing circuitry 51 first executes the process of S151. In the process of S151, the processing circuitry 51 calculates a criterion value in the speed region. This process is the same as the process executed by the processing circuitry 51 in the process of S51 of Fig. 12.

Thereafter, the processing circuitry 51 executes the process of S152. In the S152 process, the processing circuitry 51 executes a provisional criterion value selection process. This process is the same as the process executed by the processing circuitry 51 in the process of S52 of Fig. 12.

Thereafter, the processing circuitry 51 executes the process of S153. In the process of S153, the processing circuitry 51 calculates the pass rate OR related to the provisional criterion value selected in the provisional criterion value selection process. The processing circuitry 51 updates the pair of count values for each provisional criterion value through the counting process shown in Fig. 14. In the process of S153, the processing circuitry 51 calculates the pass rate OR based on the pair of count values related to the provisional criterion value selected in the provisional criterion value selection process among the pairs of count values stored in the storage device 52.

Thereafter, the processing circuitry 51 executes the process of S154. In the process of S154, the processing circuitry 51 determines whether the pass rate OR related to the selection criterion value selected in the provisional criterion value selection process is greater than or equal to a threshold. At this time, the processing circuitry 51 determines whether the pass rate OR calculated in the process of S153 is greater than or equal to the threshold. The threshold is 95%.

When determining that the pass rate OR related to the provisional criterion value is greater than or equal to the threshold in the process of S154 (S154: YES), the processing circuitry 51 advances the process to S155. In the process of S155, the processing circuitry 51 determines whether the travel distances of the vehicle 100 in all the speed regions are greater than or equal to the prescribed value. This process is the same as the process executed by the processing circuitry 51 in the process of S54 of Fig. 12.

When determining in the process of S155 that the travel distance in the speed region of the vehicle 100 is greater than or equal to the prescribed value (S155: YES), the processing circuitry 51 advances the process to S156. In the process of S156, the processing circuitry 51 determines whether the number of Vapos values in the speed region is greater than or equal to a prescribed number. This process is the same as the process executed by the processing circuitry 51 in the process of S55 of Fig. 12.

When determining that the number of the Vapos values in the speed region is greater than or equal to the prescribed number in the process of S156 (S156: YES), the processing circuitry 51 advances the process to S157. In the process of S157, the processing circuitry 51 determines that the pass rate in the speed region satisfies the performance condition. Thereafter, the processing circuitry 51 ends the series of processes illustrated in Fig. 15.

When determining that the pass rate OR related to the provisional criterion value is less than the threshold in the process of S154 (S154: NO), the processing circuitry 51 advances the process to S158.

When determining in the process of S155 that the travel distance in the speed region of the vehicle 100 is less than the prescribed value (S155: NO), the processing circuitry 51 advances the process to S158.

When determining that the number of the Vapos values in the speed region is less than the prescribed number in the process of S156 (S156: NO), the processing circuitry 51 also advances the process to S158.

In the process of S158, the processing circuitry 51 determines that the pass rate in the speed region does not satisfy the performance condition. Thereafter, the processing circuitry 51 ends the series of processes illustrated in Fig. 15.

### Operation and Advantages of the Process of Second Embodiment

(2-1) The data acquisition device 50 of the second embodiment has the advantages (1-2) to (1-7) of the first embodiment.

(2-2) The data acquisition device 50 calculates an acceleration and calculates a Vapos value, which is a reference value, each time the traveling speed is acquired during the vehicle performance test. During the vehicle performance test, the data acquisition device 50 performs determination of comparing the Vapos value with a provisional criterion value, and sequentially updates the calculated values. The data acquisition device 50 checks whether the acquired data is appropriate data acquired through the vehicle performance test satisfying the performance condition based on the calculated values after the end of the vehicle performance test.

In this manner, the data acquisition device 50 updates the calculated values used for the determination each time the traveling speed is acquired. Accordingly, the data acquisition device 50 only needs to store the updated calculated values. That is, the data acquisition device 50 does not need to continuously record all the data used for calculating the calculated value until the end of the vehicle performance test.

Accordingly, the data acquisition device 50 can determine whether the manner in which the vehicle performance test is conducted satisfies the specified performance condition without requiring a relatively large storage capacity.

### Other Embodiments

The above-described embodiments may be modified as follows. The above-described embodiments and the following modifications can be combined as long as the combined modifications remain technically consistent with each other.

The speed regions are not limited to the ones shown in Figs. 4 and 7 to 9. The low-speed region LVR, the medium-speed region MVR, and the high-speed region HVR need not be divided by the speeds shown in Figs. 4 and 7 to 9. Further, the speed regions may be divided into two regions, or may be divided into four or more regions.

In the provisional criterion value selection process, the data acquisition device 50 may select, as the selection criterion value, a provisional criterion value greater than the smallest provisional criterion value from among multiple provisional criterion values greater than or equal to the criterion value.

The data acquisition device 50 does not necessarily need to calculate the Vapos value in the manner shown in Fig. 6. For example, the data acquisition device 50 may calculate the Vapos value based on the traveling speed of the vehicle 100 and the output value of a sensor that measures the acceleration of the vehicle 100. In this case, in the series of processes shown in Fig. 5, the data acquisition device 50 may calculate the current Vapos value based on the currently acquired speed instead of the Vapos value based on the previously acquired speed.

The data acquisition device 50 may determine that the pass rate OR satisfies the performance condition when the pass rate OR is greater than or equal to the threshold in all the speed regions even if the distance traveled by the vehicle 100 in any of the speed regions is not greater than or equal to the prescribed distance value.

The data acquisition device 50 may determine that the pass rate OR satisfies the performance condition when the pass rate OR is greater than or equal to the threshold in all the speed regions even if the number of Vapos values in any of the speed regions is not greater than or equal to the prescribed number.

The data acquisition device 50 may calculate the Vapos value even when the calculated previous acceleration is less than or equal to the prescribed acceleration.

The data acquisition device 50 does not necessarily need to be an electronic control unit mounted on the vehicle 100. For example, the data acquisition device 50 may be an external device carried onboard the vehicle 100.

The data acquisition device is not limited to a device that includes a CPU and ROM and executes software processing. That is, the data acquisition device may have any configuration as long as it has any one of the following configurations (a) to (c). (a) The data acquisition device includes one or more processors that execute various processes in accordance with a computer program. The processor includes a CPU and a memory module, such as RAM and ROM. The memory module stores program codes or instructions configured to cause the CPU to execute the processes. The memory module, which is a non-transitory computer-readable storage medium, includes any type of media or program product that are accessible by general-purpose computers and dedicated computers. The data acquisition device includes one or more dedicated hardware circuits that execute various processes. The dedicated hardware circuits include, for example, an application specific integrated circuit (ASIC) and a field programmable gate array (FPGA). (c) The data acquisition device includes a processor that executes part of various processes according to programs and a dedicated hardware circuit that executes the remaining processes.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A data acquisition device (50) mounted on a vehicle (100), comprising:
processing circuitry (51); and
a storage device (52), wherein
the processing circuitry (51) is configured to acquire a traveling speed of the vehicle (100) multiple times,
the processing circuitry (51) is configured to perform, each time the traveling speed is acquired during a vehicle performance test of the vehicle (100):
identifying which of multiple divided speed regions (LVR, MVR, HVR) a subject traveling speed, which is one of the acquired traveling speeds, belongs to (S31);
updating, as an average vehicle speed in the identified speed region (LVR, MVR, HVR), a sum of a quotient obtained by dividing the subject traveling speed by a number of acquisitions (NC) of the multiple traveling speeds in the identified speed region (LVR, MVR, HVR) and a quotient obtained by dividing an accumulated value of the multiple traveling speeds excluding the subject traveling speed in the identified speed region (LVR, MVR, HVR) by the number of acquisitions (NC) (S37);
calculating a reference value (Van-1) that is a product of the subject traveling speed (V1) and an acceleration (ACn-1) of the vehicle (100);
determining whether the reference value (Van-1) is less than or equal to a provisional criterion value (RVL1 to RVL4, RVM1 to RVM4, RVH1 to RVH4) (S41), the provisional criterion value (RVL1 to RVL4, RVM1 to RVM4, RVH1 to RVH4) being a value output in the identified speed region (LVR, MVR, HVR) by a function that outputs a criterion value (RVL, RVM, RVH) when the average vehicle speed (VLag, VMang, VHang) is input into the function, and the provisional criterion value being one of provisional criterion values (RVL1 to RVL4, RVM1 to RVM4, RVH1 to RVH4) corresponding to the multiple speed regions (LVR, MVR, HVR); and
updating, as a calculated value (OR), a ratio of a number of the reference values (Van-1) that are less than or equal to the provisional criterion value (RVL1 to RVL4, RVM1 to RVM4, RVH1 to RVH4) to a number of the reference values (Van-1) that belong to the identified speed region (LVR, MVR, HVR) and are stored in the storage device (52) for each of the provisional criterion values (RVL1 to RVL4, RVM1 to RVM4, RVH1 to RVH4) (S45), and
the processing circuitry (51) is configured to perform, by checking information stored in the storage device (52) after the vehicle performance test is ended:
calculating (S51) the criterion values (RVL, RVM, RVH) in the respective speed regions (LVR, MVR, HVR);
selecting, as a selection criterion value (RVL3), one of the provisional criterion values (RVL3 and RVL4) that are greater than or equal to the criterion values (RVL) (S52);
determining that the manner in which the vehicle performance test is conducted satisfies a performance condition when, in all the speed regions (LVR, MVR, HVR), the calculated value (OR) related to the selection criterion value is greater than or equal to a threshold (S53: YES) (S56); and
determining that the manner in which the vehicle performance test is conducted does not satisfy the performance condition when, in at least any one of the speed regions (LVR, MVR, HVR), the calculated value related to the selection criterion value is less than the threshold (S53: NO) (S57).

2. The data acquisition device according to claim 1, wherein the processing circuitry (51) is configured to select, as the selection criterion value (RVL3), the provisional criterion value (RVL3) having the smallest value from among the multiple provisional criterion values (RVL3 and RV4) greater than or equal to the criterion value (RVL) (S52).

3. The data acquisition device according to claim 1 or 2, wherein
the processing circuitry (51) is configured to acquire, by acquiring the traveling speed of the vehicle (100) multiple times:
a currently acquired speed (Vn) as the traveling speed that is acquired at a current measurement;
a previously acquired speed (Vn-1) as the traveling speed that was acquired at a previous measurement; and
a speed acquired two measurements earlier (Vn-2) as the traveling speed that was acquired two measurements earlier, and
the processing circuitry (51) is configured to perform, each time the traveling speed is acquired during the vehicle performance test:
calculating, based on the speed acquired two measurements earlier (Vn-2) and the currently acquired speed (Vn), the acceleration (ACn-1) of the vehicle (100) at a time point of acquiring the previously acquired speed (Vn-1) (S21); and
calculating the reference value (Van-1) based on the previously acquired speed (Vn-1) and the acceleration (ACn-1) at the time of acquiring the previously acquired speed (Vn-1) (S23).

4. The data acquisition device according to claim 3, wherein
the processing circuitry (51) is configured to perform, each time the traveling speed is acquired during the vehicle performance test:
calculating an incremental travel distance (S33), the incremental travel distance being a distance traveled by the vehicle (100) from when the speed acquired two measurements earlier (Vn-2) was acquired to when the previously acquired speed (Vn-1) was acquired;
identifying one of the speed regions (LVR, MVR, HVR) to which the previously acquired speed (Vn-1) belongs (S31); and
updating an accumulated incremental travel distance value stored in the storage device (52) for each of the speed regions (LVR, MVR, HVR) (S35), the accumulated incremental travel distance value being an accumulated value of the incremental travel distance calculated for the traveling speed belonging to the speed region (LVR, MVR, HVR), and
the processing circuitry (51) is configured to perform, by checking information stored in the storage device (52) after the vehicle performance test is ended:
determining, when the accumulated incremental travel distance value in at least any one of the speed regions (LVR, MVR, HVR) is less than or equal to a prescribed value (S54: NO), that the manner in which the vehicle performance test is conducted does not satisfy the performance condition (S57) even if the ratios in all the speed regions (LVR, MVR, HVR) are greater than or equal to the threshold (S53: YES).

5. The data acquisition device according to claim 3 or 4, wherein the processing circuitry (51) is configured to perform determining, when the number of the reference values (Van-1) in any one of the speed regions (LVR, MVR, HVR) is less than or equal to a prescribed number (S55: NO), that the manner in which the vehicle performance test is conducted does not satisfy the performance condition (S57) even if the ratios in all the speed regions (LVR, MVR, HVR) are greater than or equal to the threshold (S53: YES).

6. The data acquisition device according to any one of claims 1 to 5, wherein the processing circuitry (51) is configured to not perform calculating the reference value (Van-1) when the acceleration (ACn-1) is less than or equal to a prescribed acceleration (S22: NO).

7. The data acquisition device according to any one of claims 1 to 6, wherein the processing circuitry (51) and the storage device (52) are formed by at least one of one or multiple onboard electronic control units of the vehicle (100).

8. A data acquisition device (50) mounted on a vehicle (100), comprising:
processing circuitry (51); and
a storage device (52), wherein
the processing circuitry (51) is configured to acquire a traveling speed of the vehicle (100) multiple times,
the processing circuitry (51) is configured to perform, each time the traveling speed is acquired during a vehicle performance test of the vehicle (100):
identifying which of multiple divided speed regions (LVR, MVR, HVR) a subject traveling speed (V1), which is one of the acquired traveling speeds, belongs to (S31);
updating, as an average vehicle speed in the identified speed region (LVR, MVR, HVR), a sum of a quotient obtained by dividing the subject traveling speed (V1) by a number of acquisitions (NC) of the multiple traveling speeds in the identified speed region (LVR, MVR, HVR) and a quotient obtained by dividing an accumulated value of the multiple traveling speeds excluding the subject traveling speed (V1) in the identified speed region (LVR, MVR, HVR) by the number of acquisitions (NC) (S36, S37);
calculating a reference value (Van-1) that is a product of the subject traveling speed (V1) and an acceleration (ACn-1) of the vehicle (100);
determining whether the reference value (Van-1) is less than or equal to a provisional criterion value (RVL1 to RVL4, RVM1 to RVM4, RVH1 to RVH4) (S141), the provisional criterion value being a value output in the identified speed region (LVR, MVR, HVR) by a function that outputs a criterion value (RVL, RVM, RVH) when the average vehicle speed is input into the function, and the provisional criterion value being one of provisional criterion values corresponding to the multiple speed regions; and
updating, as calculated values, a number of the reference values belonging to the identified speed region stored in the storage device (52) for each of the provisional criterion values and a number of the reference values that are less than or equal to the provisional criterion value (S142, S143), and
the processing circuitry (51) is configured to perform, by checking information stored in the storage device (52) after the vehicle performance test is ended:
calculating the criterion value (RVL) in each of the speed regions (LVR) (S151);
selecting, as a selection criterion value (RVL3), one of the provisional criterion values (RVL3 and RVL4) that are greater than or equal to the criterion values (RVL) (S152);
calculating, for each of the speed regions (LVR, MVR, HVR), a ratio of a number of the reference values less than or equal to the selection criterion value (RVL3) to a number of the reference values belonging to the speed region (LVR, MVR, HVR) (S153);
determining that the manner in which the vehicle performance test is conducted satisfies the performance condition (S157) when the at-or-below maximum criterion value ratios (MxOR) in all the speed regions (LVR, MVR, HVR) are greater than or equal to a threshold (ORth) (S154: YES); and
determining that the manner in which the vehicle performance test is conducted does not satisfy the performance condition (S158) when the ratio in at least one of the speed regions (LVR, MVR, HVR) is less than the threshold (S154: NO).

9. The data acquisition device according to claim 8, wherein the processing circuitry (51) is configured to select, as the selection criterion value (RVL3), the provisional criterion value (RVL3) having the smallest value from among the multiple provisional criterion values (RVL3 and RV4) greater than or equal to the criterion value (RVL) (S152).

10. The data acquisition device according to claim 8 or 9, wherein
the processing circuitry (51) is configured to acquire, by acquiring the traveling speed of the vehicle (100) multiple times:
a currently acquired speed (Vn) as the traveling speed that is acquired at a current measurement;
a previously acquired speed (Vn-1) as the traveling speed that was acquired at a previous measurement; and
a speed acquired two measurements earlier (Vn-2) as the traveling speed that was acquired two measurements earlier, and
the processing circuitry (51) is configured to perform, each time the traveling speed is acquired during the vehicle performance test:
calculating, based on the speed acquired two measurements earlier (Vn-2) and the currently acquired speed (Vn), the acceleration (ACn-1) of the vehicle (100) at a time point of acquiring the previously acquired speed (Vn-1) (S21); and
calculating the reference value (Van-1) based on the previously acquired speed (Vn-1) and the acceleration (ACn-1) at the time of acquiring the previously acquired speed (Vn-1) (S23).

11. The data acquisition device according to claim 10, wherein
the processing circuitry (51) is configured to perform, each time the traveling speed is acquired during the vehicle performance test:
calculating an incremental travel distance (S33), the incremental travel distance being a distance traveled by the vehicle (100) from when the speed acquired two measurements earlier (Vn-2) was acquired to when the previously acquired speed (Vn-1) was acquired;
identifying one of the speed regions (LVR, MVR, HVR) to which the previously acquired speed (Vn-1) belongs (S31); and
updating an accumulated incremental travel distance value stored in the storage device (52) for each of the speed regions (LVR, MVR, HVR) (S35), the accumulated incremental travel distance value being an accumulated value of the incremental travel distance calculated for the traveling speed belonging to the speed region (LVR, MVR, HVR), and
the processing circuitry (51) is configured to perform, by checking information stored in the storage device (52) after the vehicle performance test is ended:
determining, when the accumulated incremental travel distance value in at least any one of the speed regions (LVR, MVR, HVR) is less than or equal to a prescribed value (S155: NO), that the manner in which the vehicle performance test is conducted does not satisfy the performance condition (S158) even if the ratios in all the speed regions (LVR, MVR, HVR) are greater than or equal to the threshold (S154: YES).

12. The data acquisition device according to claim 10 or 11, wherein the processing circuitry (51) is configured to perform determining, when the number of the reference values (Van-1) in any one of the speed regions (LVR, MVR, HVR) is less than or equal to a prescribed number (S156: NO), that the manner in which the vehicle performance test is conducted does not satisfy the performance condition (S158) even if the ratios in all the speed regions (LVR, MVR, HVR) are greater than or equal to the threshold (S154: YES).

13. The data acquisition device according to any one of claims 8 to 12, wherein the processing circuitry (51) is configured to not perform calculating the reference value (Van-1) when the acceleration (ACn-1) is less than or equal to a prescribed acceleration (S22: NO).

14. The data acquisition device according to any one of claims 8 to 13, wherein the processing circuitry (51) and the storage device (52) are formed by at least one of one or multiple onboard electronic control units of the vehicle (100).

15. A data acquisition method executed by processing circuitry of a data acquisition device (50) mounted on a vehicle (100), the data acquisition method comprising:
acquiring, by the processing circuitry (51), a traveling speed of the vehicle (100) multiple times;
the method comprising using the processing circuitry (51) to perform, each time the traveling speed is acquired during a vehicle performance test of the vehicle (100):
identifying which of multiple divided speed regions (LVR, MVR, HVR) a subject traveling speed (V1), which is one of the acquired traveling speeds, belongs to (S31);
updating, as an average vehicle speed in the identified speed region (LVR, MVR, HVR), a sum of a quotient obtained by dividing the subject traveling speed (V1) by a number of acquisitions (NC) of the multiple traveling speeds in the identified speed region (LVR, MVR, HVR) and a quotient obtained by dividing an accumulated value of the multiple traveling speeds excluding the subject traveling speed (V1) in the identified speed region (LVR, MVR, HVR) by the number of acquisitions (NC) (S37);
calculating a reference value (Van-1) that is a product of the subject traveling speed (V1) and an acceleration (ACn-1) of the vehicle (100);
determining whether the reference value (Van-1) is less than or equal to a provisional criterion value (RVL1 to RVL4, RVM1 to RVM4, RVH1 to RVH4) (S41), the provisional criterion value (RVL1 to RVL4, RVM1 to RVM4, RVH1 to RVH4) being a value output in the identified speed region (LVR, MVR, HVR) by a function that outputs a criterion value (RVL, RVM, RVH) when the average vehicle speed (VLag, VMang, VHang) is input into the function, and the provisional criterion value being one of provisional criterion values (RVL1 to RVL4, RVM1 to RVM4, RVH1 to RVH4) corresponding to the multiple speed regions (LVR, MVR, HVR);
storing, in a storage device (52) of the data acquisition device (50), a ratio of a number of the reference values (Van-1) that are less than or equal to the provisional criterion value (RVL1 to RVL4, RVM1 to RVM4, RVH1 to RVH4) to a number of the reference values (Van-1) that belong to the identified speed region (LVR, MVR, HVR) for each of the provisional criterion values (RVL1 to RVL4, RVM1 to RVM4, RVH1 to RVH4), and
updating the ratio as a calculated value (OR) (S45), and
the method further comprising using the processing circuitry (51) to check information stored in the storage device (52) after the vehicle performance test is ended, thereby:
calculating (S51) the criterion values (RVL, RVM, RVH) in the respective speed regions (LVR, MVR, HVR);
selecting, as a selection criterion value (RVL3, RVM3, RVH3), one of the provisional criterion values (RVL3 and RVL4) that are greater than or equal to the criterion values (RVL, RVM, RVH) (S52);
determining that the manner in which the vehicle performance test is conducted satisfies a performance condition when, in all the speed regions (LVR, MVR, HVR), the calculated value (OR) related to the selection criterion value is greater than or equal to a threshold (S53: YES) (S56); and
determining that the manner in which the vehicle performance test is conducted does not satisfy the performance condition when, in at least any one of the speed regions (LVR, MVR, HVR), the calculated value related to the selection criterion value is less than the threshold (S53: NO) (S57).
